# EUROPEAN PATENT SPECIFICATION

(11) **EP 1 068 034 B1**
(45) Date of publication and mention of the grant of the patent: **02.10.2002**
(21) Application number: 99917933.6
(22) Date of filing: 31.03.1999
(51) Int. Cl.: B21D 53/84, F16H 53/02, F01L 1/047

(54) **METHOD OF AND APPARATUS FOR PRODUCING AN ASSEMBLED ROTATABLE SHAFT ARRANGEMENT**
VERFAHREN UND VORRICHTUNG ZUR HERSTELLUNG EINER ZUSAMMENGEBAUTEN DREHBAREN WELLENANORDNUNG
METHODE ET DISPOSITIF DE FABRICATION D' UN SYSTEME D' ARBRE ROTATIF ASSEMBLE

(30) Priority: 02.04.1998 GB 9807101
(43) Date of publication of application: 17.01.2001
(73) Proprietor: Federal-Mogul Sintered Products S.A., 38113 Veurey-Voroise (FR)
(72) Inventor: PURNELL, Charles, Grant, Coventry CV4 8AA (GB); BLANCHARD, Pierre, F-38240 Meylan (FR); GUEYDAN, Henri, F-38430 Moirans (FR)
(74) Representative: Hammersley, John
(86) International application number: EP9902206
(87) International publication number: WO99051374

(56) References cited:
- EP-A- 0 282 166
- DE-C- 4 201 478
- US-A- 4 597 365

## Description

The present invention relates to an assembled rotatable shaft arrangement comprising at least one functional element located on and by a hollow tubular shaft, and in particular to a method of producing such an arrangement and to an apparatus for use in the production of such an arrangement More particularly, but not exclusively, the invention relates to a camshaft assembly, commonly known as an assembled camshaft, comprising at least one cam lobe located onto a said hollow tubular shaft.

Traditionally cam lobes have been assembled on a shaft by the following method. A plurality of cam lobes each has a through opening, or shaft aperture, located on the axis of rotation of the cam lobe and extending between a pair of spaced apart, substantially parallel side faces, and a functional surface extending between, and bounding, the side faces. The cam lobes are each arranged in a receiving space, or cavity, of a first half of assembly apparatus, sometimes called a cam box, with the apertures roughly aligned. A second half of the cam box is located over the cam lobes and the cavities, as defined by the halves of the cam box are shaped with regard to the functional surfaces of the cam lobes and their desired orientation to enclose the functional surfaces in said orientations. A tubular shaft is then passed through the apertures to orientate them with respect to the longitudinal axis of the shaft, a small clearance between the sides of each cam lobe and the adjacent parts of the cam box defining the cavity permitting this. The cam box is then subjected to a load between the two halves to prevent lateral or axial movement of the cam lobes on the shaft, the load on the cam box being borne entirely by the outer functional working surface of each cam lobe, leaving a small clearance between the first and second cam boxes. The shaft is then expanded radially such that the outer wall of the shaft is pressed against the shaft aperture periphery of each cam lobe to locate it on the shaft both circumferentially and axially.

Such expansion of the tubular shaft typically expands its external dimension so that not only is it constrained within the apertures as a strong interference fit to the lobes but also it tends to exceed the dimension of the cam lobe shaft apertures without the apertures to form shoulders that further impede movement of each lobe along the expanded shaft. It is known for each cam lobe shaft aperture to have a peripheral wall profiled or otherwise adapted to permit deformation of the metal of the expanded shaft wall within the aperture to increase the strength of circumferential engagement and to permit said shoulder forming deformation of the wall of the shaft expanded without the cam lobes.

Radial expansion of such a tubular shaft is often performed by passing an over-sized body or mandrel through the bore of the shaft, possibly selecting dimension of shaft, shaft aperture and mandrel such that notwithstanding the different constraints to shaft expansion within and without the cam lobe apertures, the expanded shaft retains a smooth substantially uniform bore.

Notwithstanding such steps taken to ensure that each cam lobe is secured with respect to the expanded shaft, the lobes may nevertheless move relative to the cam box during expansion of the shaft since a load imposed on the lobes longitudinally of the tubular shaft during its expansion can only be resisted by the frictional resistance of the functional cam lobe surface interfacing with the cam box. This can lead to damage of the functional surfaces of the cam lobes. Although it is possible to accommodate damage to the functional surfaces of the cam lobes by manufacturing them of a size greater than that required and grinding or otherwise dressing the functional surfaces the desired shape subsequent to fastening the lobes to the shaft, this introduces an additional processing step and is thus undesirable. This prospect shows the method to be inherently inappropriate for use with cam lobes (or similar elements) made initially to final dimensions, for example by powder metallurgy techniques of pressing and sintering, where there is no expectation of subsequent dressing of the working surface.

Likewise, the above described method is suitable only for so-called prismatic cam lobes (or similar elements) which are of substantially uniform section at different points longitudinally, that is, with the functional surfaces extending parallel to the shaft axis; so-called three-dimensional cam lobes or elements, which vary in cross-sectional profile and/or dimension in a longitudinal direction, usually tapered and/or skewed, are susceptible to longitudinal displacement by the transverse clamping forces and clearly not suited to clamping by way only of the functional surfaces.

The method involving clamping of the functional surfaces of the cam lobe elements also presents problems in respect of ensuring that individual cam lobes assume and maintain specific orientations, as these orientations are defined between the relatively large curvature functional surfaces of the cam lobes and flat or similarly curved surfaces of the cam box.

The above identified disadvantages of locating elements, particularly cam lobes, for, and while, securing them to an expanded tubular shaft, have been addressed in , for example, US-A-5195229, US-A-5437097 and DE-C-4201478.

In US -A-5195229 each cam lobe is formed with the lobe parts each side of a bisector, extending from the heel of the lobe to the shaft aperture, offset axially to define a shoulder extending the length of the lobe on each side face thereof. Cam assembly apparatus includes lobe-receiving cavities defined by spacer elements having like shoulders, such shoulders being defined perpendicular to, and in, a plane of separation of halves of the apparatus which extends through the shaft rotation axis, the shoulders in the plane of the joint being defined by axially offset spacer elements. As described, the shoulders are defined for the specific purpose of fixing the orientations of the lobes about the shaft; the side faces of the cam lobes and spacer elements define the axial positions. The positions of the cam lobes in directions along the bisectors that define the shoulders are indeterminate except insofar as they are located with respect to the closely fitting shaft, prior to its expansion, which avoids engagement between the functional surfaces and the apparatus.

US-A-5437097 describes an assembly method and apparatus as indicated in the preamble of claims 1 and 8 wherein the side face of each cam lobe rests against a supporting spacer member which positions it axially with respect to the longitudinal axis of a tubular shaft to be inserted therethrough. Prior to insertion of the shaft the orientation of the lobe about the longitudinal axis is defined with respect to the apparatus by means of an axially extending location feature, namely a pin, extending between recesses in the supporting member and the side face of the cam lobe. Thereafter, when the shaft is inserted, the cam lobe is re-aligned by rotation about the peg so that the shaft aperture is aligned to receive the tubular shaft, whereby the shaft, peg and supporting member face define the position of the cam with respect to the shaft as the shaft is expanded radially to secure the cam lobes thereto.

DE-C-4201478 proposes an assembly technique which in part addresses the problem of location by locating cam elements with respect to each other axially and orientationally by means of side wall features which engage with element clamping means. A hollow tubular shaft extending through these clamped elements is expanded radially by internal hydraulic pressure; initially the tubular wall is deformed within elastic limits and confined by the through apertures of the clamped elements with an engagement that defines the rotational and axial position of each element relative to the tubular shaft wall, but thereafter the elements are unclamped as the tubular shaft is further expanded, to undergo plastic deformation which finally locates the elements with respect to the walls of the tubular shaft.

Notwithstanding the initial clamped holding of the elements until located with respect to the tubular shaft wall, such wall is in a state of elastic expansion/deformation and with a tendency to uniformity about and along its longitudinal axis particularly when clamping forces on individual elements is released prior to continued expansion of the tubular shaft plastically, and at the end of the operation, the element through-apertures are aligned axially, and although the rotational and axial positions of the elements were defined by the clamping and elastic expansion, the relationship between the rotational axis of the expanded shaft and working surfaces of the elements is as indefinite as the relationship between those working surfaces and through apertures that occurs in the other assembly methods described.

It has been found that although said assembly techniques that avoid direct clamping of the functional surfaces of the elements avoid damage thereto, when an assembled shaft is rotated about an axis extending along the shaft, the instantaneous positions of the functional surfaces of the elements are somewhat variable, leading to the conclusion that there is merit in defining the positions of the functional surfaces relative to the rotation axis during assembly. Such accuracy in relation to the functional surfaces is of particular importance to cam lobes.

Investigations into the above have shown that in forming a functional element, particularly a cam lobe asymmetrical in side view, it is difficult to position the relatively large shaft aperture accurately with respect to the functional surface, and this is particularly true for cam lobes (and other elements) which are provided initially to final shape and dimensions by moulding or casting operations which involve creating such aperture as part of the operation rather than subsequent machining. Consequently, if the shaft aperture is 'offset' from its desired position with respect to the functional surface of any element, then when the element is fixed to the periphery of the shaft which is thereafter caused to rotate about its longitudinal axis, the locus of any part of the functional surface is correspondingly offset from the anticipated path computed with respect to the coincidental longitudinal and rotation axis of the shaft.

It is therefore believed that avoiding damage to functional surfaces of cam lobes and other elements by reliance upon the unexpanded tubular shaft for location is inadequate.

It is an object of the present invention to provide a method of producing an assembled shaft arrangement of a plurality of functional elements secured on, and by, an expanded tubular shaft which overcomes perceived disadvantages of known methods. It is also an object of the present invention to provide assembly apparatus for performing said method involving little additional complexity compared to known apparatus, and to provide such an assembled shaft arrangement.

This object is achieved by the method of claim 1 and the apparatus according to claim 8.

Embodiments of the invention will now be described in relation to an assembled camshaft and with reference to the accompanying drawings, in which
Figure 1 is a prospective view of an assembled camshaft arrangement of generally known form, comprising bearing and cam lobe elements located on, and by, an expanded tubular shaft,
Figure 2 is a sectional elevation through an assembled camshaft arrangement in accordance with the present invention, illustrating schematically the manner of its assembly,
Figure 3(a) is a cross-sectional elevation of an assembled camshaft in accordance with the present invention, showing a cam lobe in side view that illustrates the presence of location feature means extending from the side face as a pair of spaced protrusions,
Figure 3(b) is a sectional elevation of a two-half assembly apparatus in accordance with the invention showing a first half comprising a stack of element receiving spaces each shown containing an element such as a cam lobe or bearing element, alternating with lobe positioning members, and a second half comprising a cover secured to the stack, and longitudinal bias means,
Figure 3(c) is a cross section of the apparatus along the line A-A of Figure 3(b) showing a positioning member of the first half and the second half, separated for clarity,
Figure 4(a) is a sectional elevation through a part of assembly apparatus, similar to that of Figure 3(b), showing an alternative form of longitudinal bias means,
Figure 4(b) is a sectional elevation through a part of assembly apparatus, similar to that of figure 3(b), showing bias means acting in an opposite direction,
Figure 4(c) is a sectional elevation through a part of assembly apparatus similar to that of figure 4(b), showing the provisions of location feature reception means at both sides of an element receiving space for location feature means on both side faces of a functional element,
Figure 5(a) is a sectional elevation through a second embodiment of assembly apparatus in which the element positioning members are split, and separable transversely to the longitudinal axis of the apparatus and arrangement assembled therein,
Figures 5(b) and 5(c) are cross-sectional views through the apparatus of Figure 5(a) along the lines B-B and C-C respectively,
Figure 5(d) is a sectional elevation through a third embodiment of assembly apparatus in which alternate element positioning members are separable transversely to the longitudinal axis of the apparatus,
Figure 6(a) is a sectional elevation through part of an alternative form of functional element and assembly apparatus illustrating location feature means and feature reception means which cause the element side face to be spaced from the positioning member,
Figure 6(b) and 6(c) are separate cross-sectional views through different forms of location features means and feature reception means viewed in the plane of Figure 6(a) illustrating alternative forms thereof,
Figures 7(a), 8(a) and 9(a) are cross-sections through second, third and fourth embodiments of assembled camshaft showing location feature means as an elongated protrusion,
Figures 7(b), 8(b) and 9(b) are cross-sectional views, similar to Figure 2(c) through fourth, fifth or sixth embodiments respectively of assembly apparatus for producing the assembly camshafts of Figures 7(a), 8(a) and 9(a),
Figure 10 is a cross-sectional view through a modified form of the assembly apparatus of Figure 2(c) for providing an element receiving space as a cavity conforming to the shape of the element and surrounding such element with an expansion inhibiting surface,
Figure 11(a) is a cross-section through a fifth embodiment of camshaft arrangement showing a bearing element having location feature means,
Figures 11(b) and 11(c) are sectional elevation and cross-sectional views through a seventh embodiment of assembly apparatus having location feature reception means conforming dimensionally to the location feature means, and
Figure 12 is a sectional elevation through an eighth embodiment of assembly apparatus in accordance with the present invention.

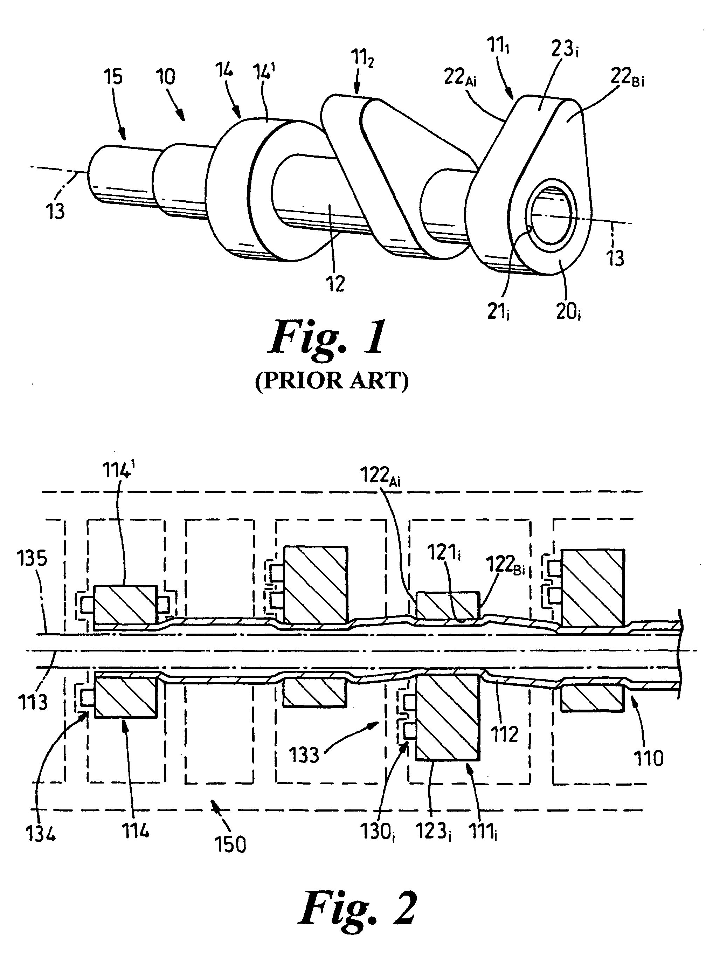

Referring to Figure 1, an assembled shaft arrangement 10, namely an assembled camshaft of known form, comprises a plurality of functional elements, cam lobes 11₁, 11₂... assembled on, and secured with respect to radially expanded tubular shaft 12.

The shaft is intended to rotate about a rotation axis 13 extending longitudinally thereof, this being possible by mounting the shaft by way of a bearing surface, formed either by a surface 14¹ of cylindrical element 14, or by a surface 15 of the shaft.

As is well known in the art, each element 11ᵢ (where i = 1, 2, 3 ...), be it cam lobe or bearing, comprises a solid body 20ᵢ having a shaft aperture 21ᵢ extending therethrough between a pair of spaced apart, substantially parallel opposing side faces 22_{Ai}, 22_{Bi}, and a functional, or working, surface 23ᵢ, extending axially between, and bounding, the side faces.

The techniques of, and assembly apparatus for, disposing the functional elements, cam lobes and others, in a linear array or stack, with the shaft features substantially aligned so that a shaft can be inserted therethrough and holding the elements whilst the shaft is expanded radially, are generally known from the art.

However, such techniques known hitherto concentrate upon aligning the element shaft apertures with the unexpanded shaft as part of the pre-expansion positioning of the elements. It will be appreciated from Figure 1 that if any shaft aperture 21ᵢ is incorrectly disposed in relation to the functional surface 23ᵢ of the element, then any effort in orientating the element about the shaft axis accurately will be wasted as the functional surface describes an unpredictable path during rotation.

The premise behind the present invention is that of defining the rotation axis of the assembled shaft arrangement and positioning the functional surface of each element with respect to that rotation axis, rather than aligning shaft aperture and shaft. In practice, the rotation axis of the arrangement is defined in terms of a datum, such as the off-axis bearing surface 15 or 14¹ about which the shaft is actually supported in rotation, and the functional surfaces 23ᵢ positioned with respect thereto and notwithstanding any minor mis-alignments of the shaft aperture through which the unexpanded tubular shaft must pass prior to expansion.

Having regard to the above discussed potential for damage to such functional surfaces by transversely clamping the elements thereby, the assembly method in accordance with the present invention utilises location feature means extending from at least one side face of each element, accurately disposed with respect to the functional surface but spaced therefrom and the shaft aperture, disposing the elements in a linear array with the shaft apertures extending in the same longitudinal direction, and restraining the elements with respect to each other by way of the location feature means both before and as the tubular shaft is expanded. In particular the location feature means is employed to position each element spatially with respect to a datum, such positioning not only defining the relative positions of the functional surfaces but also the shaft apertures independently of the others and of the unexpanded shaft.

For ease of understanding, reference is made to Figure 2 which shows schematically the elements of a camshaft assembly 110 in accordance with the present invention, namely cam lobes 111ᵢ, (where i = 1, 2, 3 ...) shaft 112 and bearing element 114. Each cam lobe 111ᵢ has functional surface 123ᵢ and a shaft aperture 121ᵢ extending between side faces 121_{Ai} and 121_{Bi}. The side face 121_{Ai} supports location feature means, shown generally at 130ᵢ and described in detail hereafter. The other cam lobes and bearing element 114 are similarly provided with functional surfaces, shaft apertures and side faces carrying location feature means. The elements, cam lobes and bearing element, are disposed in a linear array and each restrained with respect to the others by way of positioning means 133 and 134 respectively which includes the location feature means and feature reception means of substantially complementary shape defined an assembly apparatus 150 as described hereafter, relative to which a rotation axis 113 for the shaft arrangement is defined.

On the presumption that not all of the shaft apertures 121ᵢ are accurately defined with respect to their functional surfaces 123ᵢ, it is within the method also to define by the locus of common alignment of the shaft apertures a notional through passage 135, denoted in the Figure by dotted lines, dimensionally less than the individual shaft apertures and extending in the longitudinal direction.

In accordance with this method tubular shaft 112 initially has a cross section externally no greater than the through passage 135, that is, smaller than the shaft apertures, and is caused to extend through the restrained element apertures before being expanded.

It will be appreciated, and Figure 2 illustrates this in an exaggerated manner, that because the position of each element, and thus shaft aperture, is individually spatially fixed, the expanding shaft has to conform to the shaft apertures and not vice versa, with the result that the wall of the expanded shaft undulates along its length. However, it will be seen that provided the shaft aperture in the bearing element 114 is concentric with respect to the surface thereof 114¹, then the bearing element surface 114¹ will be the datum that defines the rotation axis 113 of the shaft and, as a consequence of positioning the other functional surfaces relatively to the datum by the location feature means, accurately position each functional surface with respect to the rotation axis of the arrangement.

It will be appreciated that the above method may be performed in a number of ways which position the functional elements so that their functional surfaces assume their final dispositions with respect to each other and the rotation axis of the arrangement prior to expansion of the tubular shaft.

One readily understood variation to the above outlined performance of the method would be the provision of a datum surface 15 {Figure 1) directly on the shaft rather than by a separately located element 114. Another variation would be the passage of the tubular shaft through the functional elements prior to their taking up the positions defined by the location feature means, it being fundamental to the method that the unexpanded tubular shaft does not determine the spatial positions of the elements.

It is a further feature of the method that it is readily suited to performance using existing assembly apparatus forms with only relatively minor, but crucial, modifications.

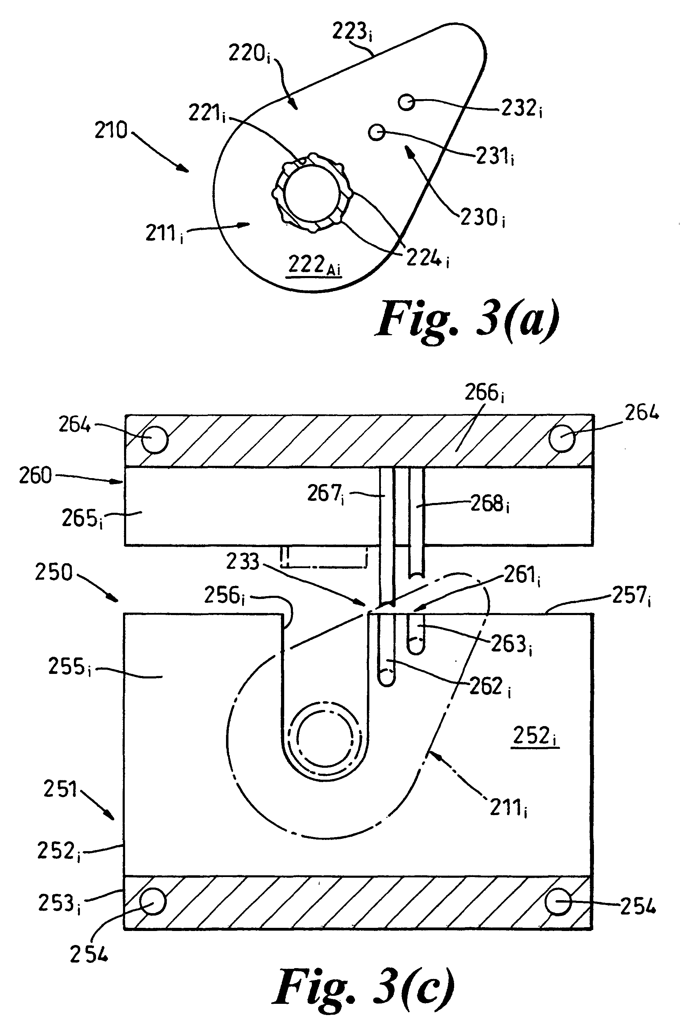

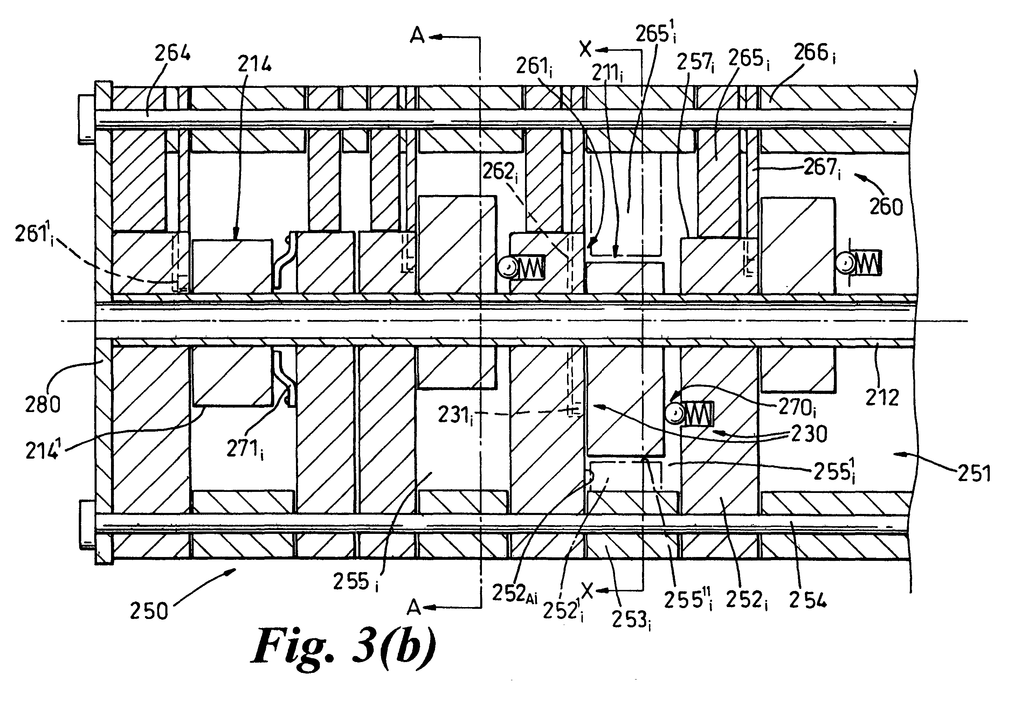

Referring now to Figures 3(a) to 3(c) which relate to a first embodiment of assembled camshaft arrangement in accordance with the invention, and a first embodiment of assembly apparatus therefor, Figure 3(a) is a cross-section through an assembled camshaft arrangement 210 and shows a side view of a cam lobe 211ᵢ. It comprises a solid body 220ᵢ which has a through opening, or shaft aperture 221ᵢ extending between two, substantially parallel side faces, only one of which, 222_{Ai}, is shown.

The side faces are separated and bounded by a functional surface 223ᵢ. The shaft aperture may also possess a number of stress relief features 224ᵢ about its periphery. The cam lobe is also provided on at least the side face 222_{Ai} with location feature means, indicated generally at 230ᵢ, which defines a cam lobe datum positionally related to the functional surface 223ᵢ but separated therefrom, and without interference thereto. Although not having a precise positional relationship with respect to the shaft aperture 221ᵢ, the location feature means is separated therefrom also so as not to interfere with expansion of the tubular shaft at the ends of the aperture.

The location feature means 230ᵢ extends from the surface of the side face and comprises a plurality of protrusions of cylindrical, domed or conical or otherwise tapered profile spaced apart in the plane of the side face to define at least two spaced apart location points on the side face relative to the functional surface. As illustrated two such protrusions, 231ᵢ and 232ᵢ, are shown.

Figures 3(b) and 3(c) show assembly apparatus 250 which is adapted to work with the location feature means of a plurality of the cam lobes 211ᵢ and a bearing element 214 (corresponding to bearing element 114) in producing the assembled camshaft arrangement. Assembly apparatus 250 comprises a longitudinally extending stack of bodies, indicated generally at 251, in particular element positioning members 252ᵢ and spacers 253ᵢ which are mounted alternately on guide rails 254 and define a series of element receiving spaces, or cavities, 255ᵢ separated from each other by the element positioning members. For ease of understanding the assembly apparatus is shown with each of the cavities containing an element 211ᵢ (or bearing element 214) and with a tubular shaft 212 extending through them. The element positioning members each have a shaft removal recess, in the form of slot 256ᵢ, extending therethrough longitudinally and transversely to the edge 257ᵢ of the member, the slot having a width greater than that attainable by the tubular shaft after expansion.

A cover part 260, also comprising a stack of spacer elements as discussed more fully below, is arranged to extend longitudinally alongside the stack and be secured with respect thereto in a direction transversely to said longitudinal direction by conventional securing means, such as mechanical clamps, screws or hydraulic or pneumatic ram means (not shown).

Positioning means, indicated generally at 233, is provided to locate each functional element (cam lobe or bearing) placed in a receiving space individually with respect to the adjacent positioning member, and to this end one face 252_{Ai} of each positioning member facing longitudinally and extending in a direction transversely thereto, conveniently referred to herein as a transverse face, contains feature reception means 261ᵢ for the protrusions 231ᵢ and 232ᵢ of the associated element, being in the form of recesses 262ᵢ and 263ᵢ in the face of the positioning member which extend parallel to the shaft removing slot 256ᵢ to the edge of member.

It will be seen from Figure 3(c), which shows ghosted a cam lobe element 211ᵢ having a pair of spaced protrusions, that placing the element in the receiving space with the protrusions in the recesses fixes the orientation and general position of the element in the apparatus against movement in all directions except towards the edge 257ᵢ of the positioning member and longitudinally.

The cover part 260 comprises, as indicated above, a stack of spacer elements on guide rails 264. Some of the spacer elements, 265ᵢ, have a thickness in the longitudinal direction somewhat less than the positioning members 252ᵢ and extend in a transverse direction to abut the edges 257ᵢ of the latter to clearly define receiving spaces for the elements in which the functional surfaces are clear of abutment by the apparatus. Others of the spacer elements of the cover, 266ᵢ, have descending fingers 267ᵢ 268ᵢ which are dimensioned to extend into the feature reception recesses 261ᵢ 262ᵢ in an element receiving member and, when the cover is secured to the stack, clamp against the protrusions of the element locating feature means to eliminate all potential movement transversely to the longitudinal axis.

In respect of longitudinal motion, the positioning means 230 includes longitudinally acting bias means 270ᵢ associated with each element receiving space to urge the location feature protrusions and reception recesses into engagement As illustrated, the bias means 270ᵢ as used with the receiving spaces containing cam lobes comprises a ball and spring cup embedded in the wall of the adjacent element positioning member.

Preferably, but not essentially, the positioning members are disposed such that the separation between them, that is, the longitudinal width of any receiving space, is less than the overall longitudinal width of an element to be received therein, whereby the element can be placed in the receiving space only by the location feature means engaging with the feature reception recesses; this not only minimises the distance over which longitudinal bias may have to function but also makes continued engagement of the location feature means and reception means less dependent on orientation.

Thus, as each functional element, be it asymmetric cam lobe or bearing element, is disposed in a receiving space in the assembly apparatus stack the bias means forces the side face of the element into contact with the surface of the positioning member and engagement of the location feature protrusions and reception recesses facilitates completion of the disposition. Securing of the cover means fixes the spatial position of each element, including its shaft aperture, so that a tubular shaft may be threaded through the elements from one end of the stack until it abuts a stop plate 280.

Thereafter, in known manner, such shaft is expanded to secure the cam lobe and bearing elements thereto, although the expansion is one wherein the shaft has to expand into conformation with the spatially fixed aperture walls, following which the cover part 260 is removed from the stack 251 and the assembled shaft arrangement removed transversely.

Notwithstanding the potential for the shaft of the assembled arrangement to meander as illustrated in Figure 2, the assembly of the shaft arrangement is evidenced by virtue of the element side faces having location features means which extends not only out of the plane of the side face but also in the plane of the side face to define at least two location points that inhibit rotational, as well as translational movement.

The location feature reception means for the bearing element, indicated generally at 261¹ᵢ, provides apparatus datum means and defines a positioning datum relative to which a rotatable axis of a shaft can be disposed (as a result of passing the shaft through the bearing element shaft passage) and relative to which each of the other functional elements are positioned by way of the element positioning members.

It will be appreciated that a number of variations may be made to the assembly apparatus described above, some in concert with variations to the location feature means on the elements, within the scope of the claims.

For example, as illustrated in Figure 3(b) for the bearing element 214ᵢ, the longitudinal bias means for any or all elements may be provided by a simple leaf spring arrangement 271ᵢ secured to the adjacent element positioning member or, instead, temporarily affixed to the element itself.

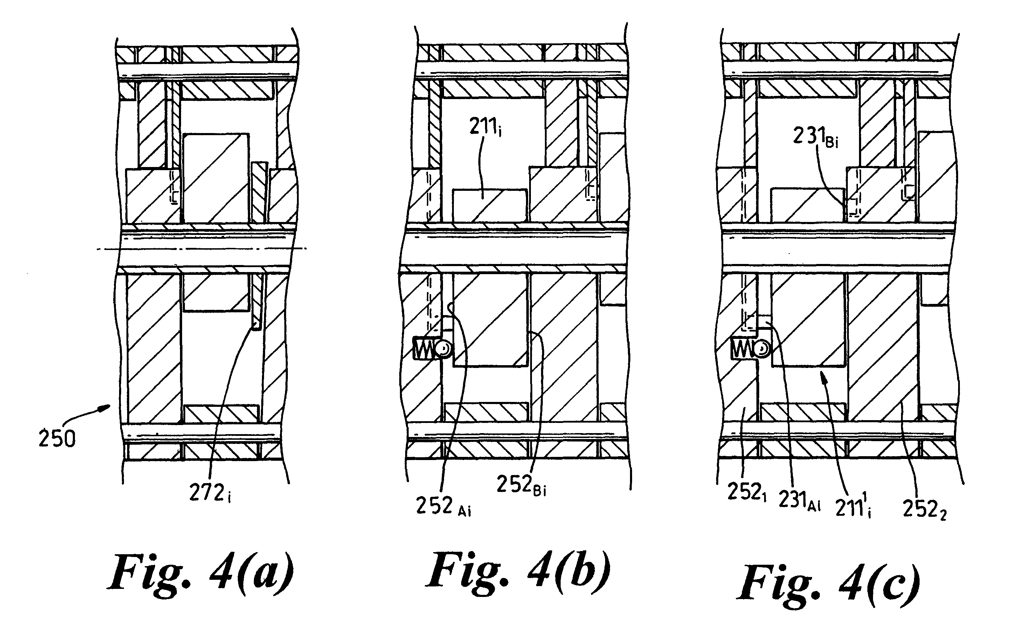

Alternatively, the bias means may comprise a magnet arrangement (not shown) which attracts each element placed in a receiving space towards its associated positioning member, a (not shown) ram driven hydraulic or gas pressure or, as illustrated schematically in Figure 4(a), the bias means may comprise a wedging member 272ᵢ inserted between each element and adjacent positioning member.

It will be appreciated that if, as described above, the overall longitudinal width of each functional element 211ᵢ, that is, including the protruding location feature means, is greater than that of the receiving space, then it is possible to bias the element longitudinally away from the location feature means, as illustrated in Figure 4(b), so that element side face 252_{Bi} abuts the positioning member facing that with the feature reception means and which abutment defines the longitudinal position of the element.

It will furthermore be appreciated that the location feature means may be associated with both side faces of any or all functional elements, as illustrated in Figure 4(c) for element 211¹ᵢ at 231_{Ai} and 231_{Bi} with the positioning members 252₁ or 252₂ defining the element receiving space both having feature reception recesses.

Insofar as the bias means is arranged to cause the element side face to abut a positioning member and close off the recesses 262ᵢ and 263ᵢ in the longitudinal direction, the fingers 267ᵢ or 268ᵢ shown carried by the cover may be discrete members (not shown) inserted into the recesses and terminating flush with the positioning member edge 257ᵢ being clamped in position by the spacer member 252ᵢ when the cover part is secured to the stack.

The provision of longitudinal bias means which acts between fixed element positioning members and the elements as they are placed in the receiving spaces is convenient, but not essential, when the structure prohibits disengagement of the location feature means and feature reception means in the absence of such longitudinal bias. Thus it is possible to provide the longitudinal bias by way of resilient or wedging members carried by the cover part in the manner of the fingers 267ᵢ and likewise descending into the element receiving space when the cover part is secured to the stack.

In the embodiment and variants described above, the stack is constructed with all of the positioning members fixed with respect to each other, notwithstanding that features such as bias means and location feature clamping fingers are separable therefrom with the cover part.

It will be appreciated that some of the element receiving members may be separable from the others transversely, or parts of each member may be separable transversely whilst operably defining the above described stack.

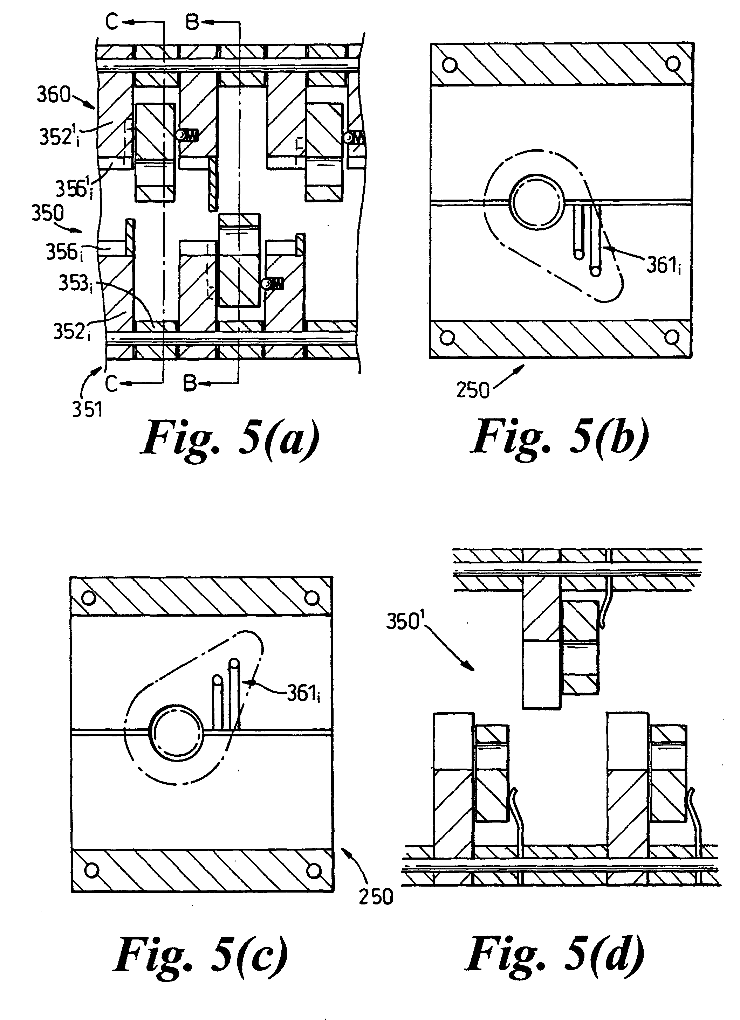

Figure 5(a) shows a second embodiment of assembly apparatus 350 in sectional elevation. A stack 351 of element positioning members 352ᵢ and spacer 353ᵢ is formed to define element receiving spaces separated by the members in the manner of apparatus 250. However, the positioning members, instead of having a shaft removal recess in the form of a deep slot are split longitudinally in a separation plane that contains the desired rotation axis of the assembled shaft arrangement into main and complementary parts 352ᵢ and 352¹ᵢ each having a shaft removal recess 356ᵢ and 356¹ᵢ, respectively, which is shallower than the aforementioned slot, whereby the recesses share the function of containing the shaft but only one of the parts has the location feature reception means, depending on which side of the separation plane it is for the element at the longitudinal position, and the other part effectively comprises the cover part 360. The main and complementary parts abut in edge to edge relationship when the cover part is secured to the stack and the shaft removal recesses and/or feature reception recesses extend to, and terminate at said edges. The stack thus comprises first and second transversely separable and joinable parts, each of which serves (in the terminology of the above descriptions) effectively both as the stack and cover part at various locations longitudinally.

Without repeating unnecessary description in detail, it will be seen from the Figure, which shows the first and second parts separated in a direction transverse to the longitudinal direction, and with reference to Figures 5(b) and 5(c) which show cross-sectional views at locations B-B and C-C (but with the first and second parts clamped to each other) that depending upon which side of the separation plane the location feature means lies, then the feature reception means 361ᵢ is defined in either the main or complementary positioning member.

As a further modification, Figure 5(d) is a sectional elevation through a third embodiment of assembly apparatus 350¹ generally similar to the apparatus 250 described with reference to Figure 3(b) but wherein alternate positioning members of the stack are separable in a direction transversely to the longitudinal direction, each presenting a relatively wide element receiving space for the placing of elements with respect thereto before the positioning members, and the placed functional elements, are brought together transversely and interdigitated to achieve the stack relationship of Figure 3(b) prior to inserting the tubular shaft for expansion.

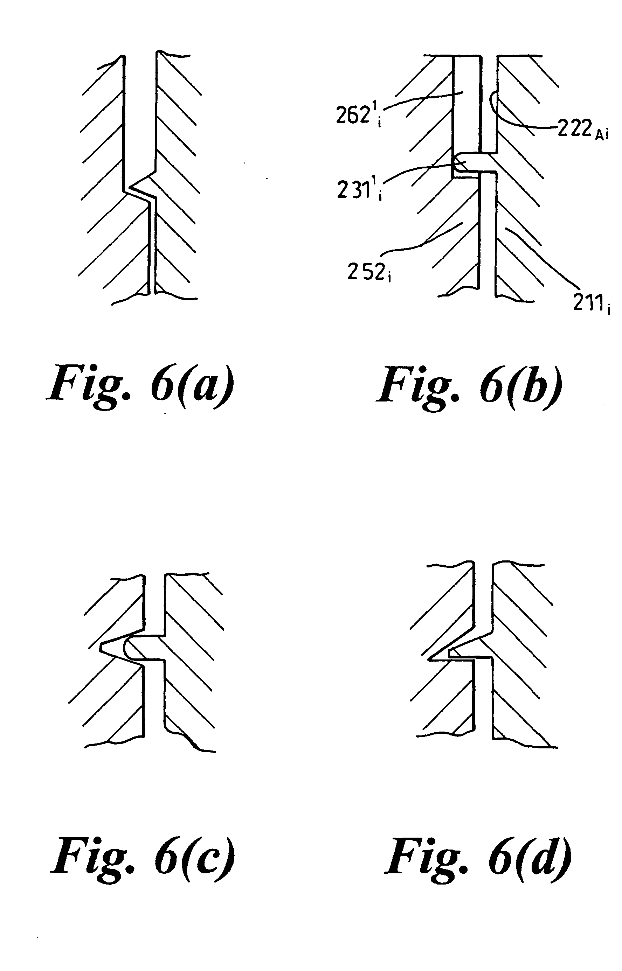

In the apparatus 250 the depth (in the longitudinal direction) of the recesses 262ᵢ and 263ᵢ in the positioning member is greater than the lengths of the protrusions 231ᵢ and 232ᵢ so that the side face of the element abuts the face of the positioning member to define the longitudinal position on the shaft with respect to the stop plate 280. Figure 6(a) is an enlarged sectional elevation of the apparatus of Figure 3(b) showing the relationship between them more clearly, illustrating also the location feature recess as a conically tapered protrusion, or 'pip', and the feature reception means complementary thereto. Although it is convenient to arrange for any element to be received in the apparatus and positioned with a side face of the element lying against the adjacent transverse face of a positioning member, it may be considered that the 'flatness' of the element side face and/or the positioning member is insufficient to define the longitudinal position of the functional surface accurately whereas the relatively smaller location feature means can. It is, therefore, possible to construct the protrusions, say 231¹ᵢ, of greater extent in the longitudinal direction than the depth of the associated recesses 262¹ᵢ, as illustrated in Figure 6(b) whereby the protrusions and recesses define the axial position of the functional surface and the side face (222_{Ai}) stands off from the surface of the positioning member. Alternatively or additionally, in a transverse plane, as illustrated in Figures 6(c) and 6(d), the recess and/or protrusions may be tapered, symmetrically or asymmetrically, to guide and assist in accurate positioning.

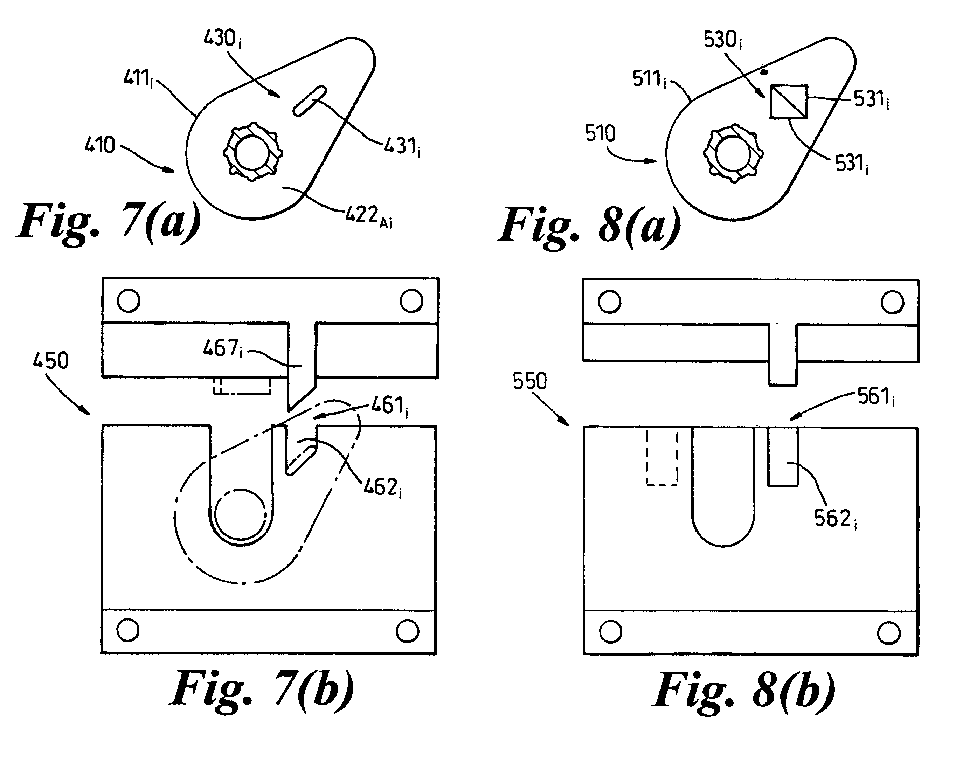

A further variation on the form of the location feature means is shown in a fourth embodiment of assembled camshaft arrangement 410 in Figures 7(a) and assembly apparatus 450 therefor in Figure 7(b). The arrangement 410 comprises inter alia cam lobes 411ᵢ which are generally similar to lobes 211ᵢ except that on the side face 422_{Ai} thereof the location feature means 430ᵢ comprises a single protrusion 431ᵢ which extends in the plane of the face to occupy the space of, and between, the above described two protrusions 231ᵢ and 232ᵢ. The assembly apparatus 450 is substantially identical to the apparatus 250 except that each positioning member has feature reception means 461ᵢ comprising a single recess 462ᵢ and the cover part 460 carries a single projecting finger member 467ᵢ to enter the recess and clamp the protrusion therein.

It will be appreciated that resistance of the protrusion 431ᵢ to rotational forces about an axis through it is primarily dependent upon the clamping force between cover part and stack, unlike the separate protrusions of 261ᵢ and 262ᵢ which can each bear against the side wall of their respective recesses. Accordingly, and as shown in comparable Figures 8(a) a fifth embodiment of assembled camshaft arrangement 410 and 8(b), for assembly apparatus 550 the functional element 511ᵢ may be formed with location feature means 530ᵢ as a protrusion 531ᵢ that extends significantly in two directions, whereby it presents a straight edge 531ᵢ to the sides of the recess 562ᵢ of feature reception means 561ᵢ.

In all of the above embodiments, the location feature means has been defined symmetrically with respect to the side face of the function element whereby all elements of a certain function, for example, cam lobes can be made identical and differences of mounting be accommodated by the feature reception means in the positioning members of the assembly apparatus. It will be appreciated that the location features means may differ between elements of the same function with the aim of simplifying the assembly apparatus.

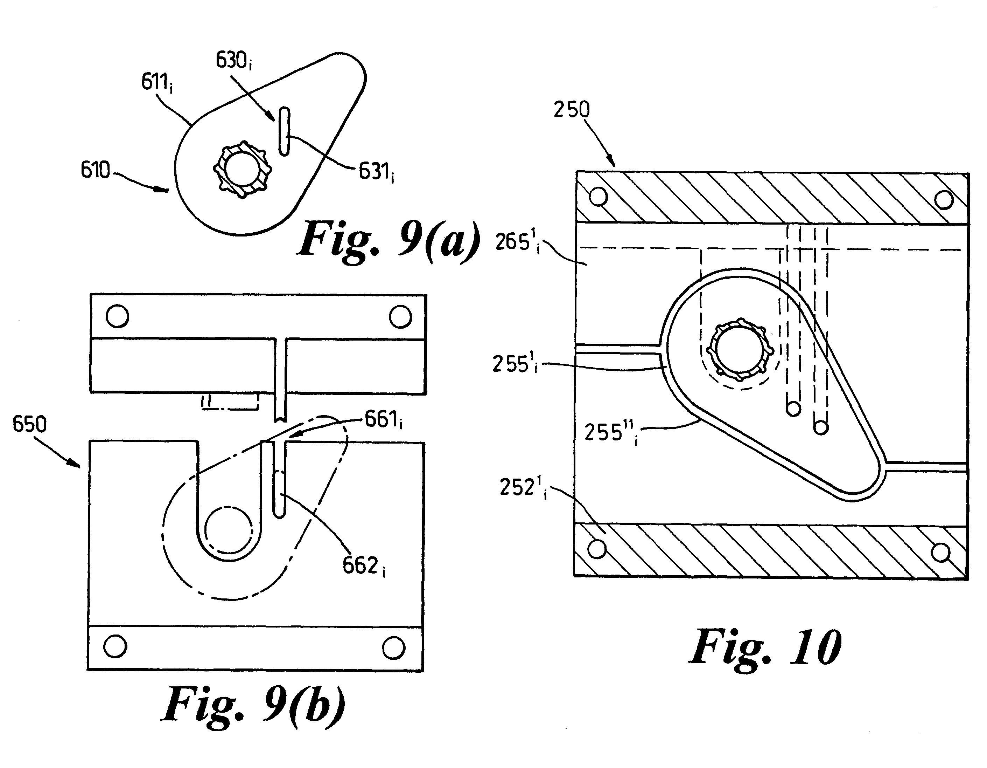

Referring to Figures 9(a) and 9(b) in a sixth embodiment of assembled camshaft arrangement 610 a cam lobe 611ᵢ has on a side face location feature means 630ᵢ as a protrusion 631ᵢ similar to 431ᵢ but extending at 45° to the axis of symmetry of the face. Such an arrangement enables assembly apparatus 650 to have positioning members each with feature reception means 661ᵢ comprising a simple, relatively narrow, recess 662ᵢ to be employed, but may require different lobe/protrusion combinations for different orientations about the longitudinal axis.

A further variation to the assembly apparatus 250, 450 etc described above is shown ghosted by chain dotted lines in Figure 3(b) and in Figure10 as a cross-section on the line X-X of Figure 3(b).

The spacers 252¹ᵢ of the stack and 265¹ᵢ of the cover part are shaped to define the element receiving spaces as cavities 255¹ᵢ of substantially the same shape as the elements to be received therein, but large enough that when each element held in position within the cavity with the cover secured to the stack it is held by the positioning means alone and not by the surfaces of the cavity applying a force to the functional surface of the element. The cavity walls provide an expansion inhibiting surface 255¹¹ᵢ positioned close enough to the working surface so that if, during radial expansion of the shaft, the pressure exerted on the element by the shaft tends to expand the element and distort the functional surface then the surface can act to resist its change of shape, notwithstanding that it would be preferable, and indeed normal, for the functional surface never to have such a force acting thereon.

It will be seen that such a cavity 255¹ᵢ that confirms substantially to an element to be received therein also performs a preliminary alignment of the location feature means and feature reception means as the element is introduced into the cavity. Therefore, it will be understood that such a cavity 255¹ᵢ conforming substantially to the shape and dimensions of a functional element may be provided but with greater clearance between the surface thereof and the functional surface of an element to be received in the cavity so that it does not form an expansion inhibiting surface, but does provide pre-alignment surfaces to ease or assist the engagement between the location feature means and feature reception means.

The assembly apparatus 250 of Figures 3(b) and (c) and the variants thereof described, is constructed with the stack of members fixed with respect to the guide rails to define for each element an effective receiving space of fixed longitudinal width less than the thickness of the element plus location feature protrusions, so that the element can slide transversely into the receiving space with the protrusions already engaged in the feature reception recesses of the positioning member. However, this does require the reception recesses to extend to an edge of the positioning member and also, for the recesses to be thereafter 'filled' to locate the protrusions therein. It will be appreciated that by making the element receiving spaces wider in the longitudinal direction each element may be placed in the receiving space with the components of the location feature means and feature reception means disengaged and then moved longitudinally to engage them. In such apparatus, the feature reception recesses need not extend to the edges of the positioning members and may conform in shape more closely to the protrusions. What is perhaps more significant is that the location feature reception means on the positioning member may actually be upstanding from the surface for receiving location feature means extending from side face into the body of the element inwardly, that is protrude into the side face of the element. Such location feature recess or recesses in the side face of the functional element would also reduce its mass, and possibly bring benefits of lower inertia to the assembled shaft arrangement

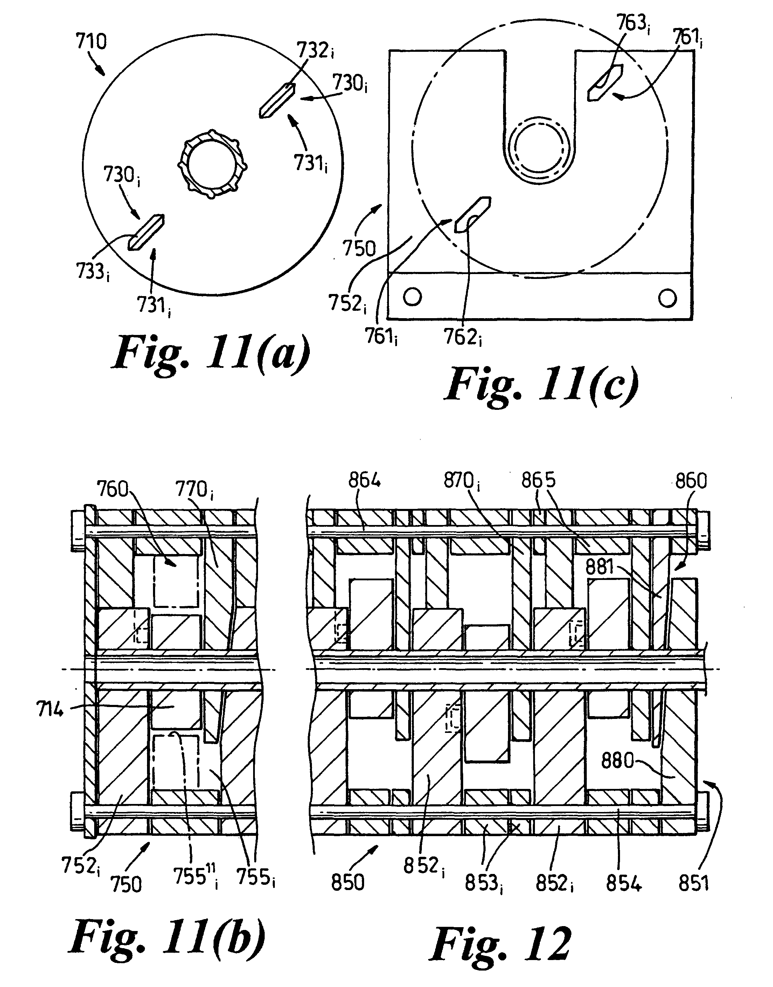

Referring to Figures 11(a) to 11(c), Figure 11(a) is a sectional elevation similar to Figure 3(a), of a seventh embodiment of assembled camshaft arrangement 710, showing in particular a bearing element 714, and Figures 11(b) and 11(c) are of assembly apparatus 750. The side face of the bearing element has location feature means 730ᵢ in the form of spaced protrusions (or recesses) 731ᵢ or 732ᵢ each in the form of a ridge extending in the plane of the side face and tapering outwardly from the face. The complementary location feature reception means 761ᵢ at the transverse surface of associated positioning member 752ᵢ has recesses 762ᵢ and 763ᵢ of similar extent,

The longitudinal width of the element receiving space 755ᵢ is greater than the overall width of the functional element (including protrusions) to permit the element to be placed in the receiving space with the parts of the location feature means separated and thereafter engaged by manipulation of the element, including longitudinal displacement as the location feature means 730ᵢ engages in the feature reception means 761ᵢ.

The cover part 760 includes a filler spacer 770ᵢ associated with each element receiving space which extends therefrom to fill the extra space no longer needed by the positioned element, that is, overlie the surface of the adjacent positioning member. The positioning member and/or filler spacer may provide bias means to act longitudinally on the element, either as resilient means carried thereby or by co-operating wedging surfaces defined by their surfaces. The apparatus is, of course, suitable for receiving a cam lobe instead of a bearing element, and notwithstanding the element type the location feature means may take any of the forms outlined above, including the location feature means comprising one or more recesses and the feature reception means comprising one or more protrusions.

It will be appreciated that the apparatus 750 of Figures 11(b) and (c) may be operated with the longitudinal axis vertical to permit the functional elements positioned by the location feature means to remain positioned prior to introducing the filler spacer 770ᵢ and applying longitudinal bias, or the adjacent positioning member or other side face of the functional element may be provided with resilient bias means that is relatively weak, but sufficient to keep the location feature means engaged, and displaceable (and possible made stronger) by the filler spacer when the cover is secured to the stack.

Instead of providing such bias means and/or orientation of the longitudinal axis to help locate and retain the functional elements with respect of the associated positioning members, the spaces defining the element receiving space may be shaped, as described above in relation to providing expansion inhibiting surfaces (or pre-alignment surfaces), as shown by chain-dotted lines 755¹¹ᵢ to effect a preliminary alignment of the element that aligns the location feature means and feature reception means and prevents their separation prior to securing the cover with the aforesaid filler spacer.

Notwithstanding the technique adopted to initially retain the location feature means and reception feature means engaged, the filler spacer 770ᵢ may be provided separately of the cover part and inserted separately in each element receiving cavity (in the manner of bias means 272ᵢ of Figure 4(a).

In all of the above described embodiments of assembly apparatus, the components of the stack and cover part have been clamped or fixed with respect to each other in the longitudinal direction to define element receiving spaces of fixed width, each element receiving space also being provided with individual bias means, as resilient or wedging means, to act on the element therein.

Referring now to Figure 12, which shows an eighth embodiment of assembly apparatus 850, this is similar to Figure 11(b) except insofar as the element positioning members 852ᵢ of the stack 851 and the intervening spacers 853ᵢ are able to slide axially on the guide rail 854, as are the spacers 865 and filler spacers 870ᵢ of the cover part 860 able to slide axially on guide rail 864. At the end of the stack and separate from the last element positioning member, is a stack end member 880 through which the guide rail 854 extends and at which it terminates. The cover part guide rail 864 has a corresponding cover end member 881 which is disposed longitudinally between the stack end member and the said last filler space member. The longitudinally adjacent surfaces of one or both of the stack and cover end members are tapered in width so that when the cover is moved transversely towards, and secured to, the stack, the stack and cover end members react against each other longitudinally and apply an axial force to the positioning members and spacers of the stack whereby any space between a functional element and adjacent positioning member can be eliminated and a longitudinal bias force applied to, and through, all of the functional elements in position in the apparatus.

Just as the longitudinal bias force applied individually to each functional element may, as mentioned above, be provided by fluid pressure through hydraulic or pneumatic ram effect, so any such fluid pressure be employed to apply longitudinal bias force to, and through, the individual members and received functional element of the stack and, if appropriate, cover part.

Such longitudinal bias force may be produced at any convenient point along the stack with or between element positioning members, provided care is taken to ensure that each element positioning member, and associated element ends up in the desired longitudinal position with respect to the datum.

Although at least one side face of each functional element has location feature means which extends from the surface it may, as indicated above, be beneficial in terms of mass reduction for the feature means to extend into the surface than protrude from it. It will be understood that the location feature means is required for the purpose of assembly only, and to this end it may be possible to provide such a protrusion from the element side face as a peg inserted into a recess in the face in the manner of the peg described in the aforementioned US-A-5437097, the peg being removed after assembly to leave a recessed, and lighter, functional element on the shaft.

It will be appreciated that the principle of spatially fixing the positions of the functional elements, and their shaft apertures independently of the tubular shaft so that the shaft confirms to the aperture positions and not vice versa may be implemented within the scope of the claims.

It will be appreciated that whereas the above illustrative descriptions have been given with respect to an assembled camshaft in which most, if not all, of the functional elements of the arrangement are cam lobes, the method of assembly may be employed for any tubular shaft arrangement having discrete elements located thereon by shaft expansion. One example of such an arrangement, whose use is comparable to that of a camshaft for an internal combustion engine, is that of rotatable spool-type valves which form inlet and outlet valves of such an engine and whose functional surfaces, often taking a non-prismatic form, for example part-spherical, have to be free of manufacturing defects to provide sealing.

## Claims

1. A method of producing an assembled rotatable shaft arrangement (110) of a plurality of functional elements (111ᵢ, 114) secured on, and by, an expanded tubular shaft, the method comprising defining a plurality of functional elements (111ᵢ) each having a shaft aperture (121ᵢ) extending between a pair of spaced apart side faces (122_{Ai}, 122_{Bi}), a functional surface (123ᵢ) extending between and bounding the side faces and, formed on at least one of the side faces, location feature means extending therefrom, disposing the elements in a linear array with the shaft apertures extending in the same longitudinal direction, restraining the elements with respect to each other by way of said location feature means against rotation about the shaft apertures and, with a said tubular shaft extending through the shaft apertures, expanding the shaft to secure the elements to the shaft, **characterised by** restraining the elements individually spatially in all directions by way of positioning means (133; 233) including the location feature means (130ᵢ; 230ᵢ) but not the functional surface, defining by the locus of common alignment of the restrained shaft apertures of the elements a through passage (135) dimensionally less than the individual shaft apertures extending in said longitudinal direction, disposing extending through said restrained shaft apertures a tubular shaft (112) having a cross section no greater than the through passage and with said elements retained in said spatially restrained relationship expanding the tubular shaft to secure each element with respect to each other.

2. A method as claimed in claim 1 comprising defining an assembly apparatus (250) having spaced apart element receiving spaces (255ᵢ) each having a boundary formed by an element positioning member, defining at a surface of each positioning member location feature receiving means (261ᵢ) complementary to the element side face location feature means (230ᵢ), and **characterised by** defining location feature means separated from the functional surface boundary and the shaft aperture defining at least two spaced apart location points (231ᵢ,232ᵢ).

3. A method as claimed in claim 2 comprising defining a shaft mounting datum (15, 114¹) relative to a desired axis (113) of rotation of the assembled shaft arrangement, disposing the location feature means of each element side face with respect to the functional surface of the element and disposing the location feature reception means of each associated positioning member with respect to said shaft mounting datum.

4. A method as claimed in claim 3 **characterised by** defining said shaft mounting datum as the working surface (114¹) of at least one functional element.

5. A method as claimed in any one of claims 2 to 4 **characterised by** effecting engagement and disengagement of said location feature means and feature receiving means in a said longitudinal direction along the axis of the shaft apertures and biasing each element axially towards its associated positioning member.

6. A method as claimed in any one of claims 2 to 5 **characterised by** defining the location feature means and feature receiving means such that with the functional element spatially positioned with respect to the positioning member thereby the side face of the element is spaced from the surface of the positioning member.

7. A method as claimed in any one of claims 1 to 6 **characterised by** surrounding at least part of the working surface of at least one restrained element with an expansion inhibiting surface (255¹ᵢ, 255¹¹ᵢ) disposed, prior to, and during expansion of the tubular shaft, to exert no restraining force on the working surface except in response to distortion of the working surface by the expanding tubular shaft.

8. Apparatus (250, 350, 350¹, 450, 550, 650, 750, 850) for producing an assembled shaft arrangement of functional elements (211ᵢ, 214) spaced apart along, and secured to, an expanded tubular shaft for carrying out the method of any one of the preceding claims, comprising a longitudinally extending stack (251) of bodies defining alternate element receiving spaces (255ᵢ) and element positioning members (252ᵢ), the element positioning members each having a shaft removal recess (256ᵢ) extending therethrough longitudinally and transversely to the edge (257ᵢ) of the member, and, at a transverse face (252_{Ai}) thereof facing an element receiving space, location feature reception means (262ᵢ), extending from the transverse face, that is shaped and positioned to co-operate with complementary location feature (231ᵢ) means formed on a side face of a said functional element, and **characterised by** positioning means (233) operable to locate each functional element, placed in a receiving space, individually with respect to an adjacent positioning member by way of engagement between said location feature means and location feature reception means and restrain it spatially with respect to the positioning member with the element shaft aperture aligned with the shaft receiving recess of the positioning member whilst the tubular shaft is expanded deformably to secure the spatially restrained element permanently thereto.

9. Assembly apparatus as claimed in claim 8 **characterised by** a cover part (260) arranged to extend longitudinally alongside the stack and be removably secured with respect thereto in a transverse direction.

10. Assembly apparatus (350) as claimed in claim 9 **characterised in that** at least some of the element positioning members are split longitudinally in a separation plane, that contains the desired rotation axis of an arrangement assembled by the apparatus into main and complementary parts (352, 352¹ᵢ) and said complementary parts are carried by the cover part (360), such that, with the cover part secured with respect to the stack (351), the main and complementary parts of the element positioning members are juxtaposed in edge to edge relationship with the shaft removing recess (356ᵢ, 356¹ᵢ) of each member part terminating at said juxtaposed edges.

11. Assembly apparatus as claimed in any one of claims 8 to 10 **characterised in that** the location feature reception means (261) is defined at the transverse surface of at least one element positioning member as at least one recess (262ᵢ, 263ᵢ) extending parallel to the shaft removing recess to an edge of the member.

12. Assembly apparatus (350¹) as claimed in claim 9 **characterised in that** at least some of the element positioning members are separable from the stack transversely to said longitudinal direction and carried by said cover part.

13. Assembly apparatus as claimed in any one of claims 8 to 12 **characterised in that** the positioning means includes longitudinal bias means (270; 271) comprising longitudinally acting resilient means (270ᵢ, 271ᵢ) operable to force the location feature means of a said functional element received in the receiving space longitudinally into co-operation with location feature reception means of an element positioning member.

14. Assembly apparatus as claimed in any one of claims 8 to 13 **characterised in that** the positioning means includes longitudinal bias means (272ᵢ) comprising wedging means (272ᵢ) co-operable with a surface of the stack operable to force the location feature means of a said functional element received in the receiving space longitudinally into co-operation with location feature reception means of an element positioning member.

15. Assembly apparatus as claimed in claim 13 or claim 14 **characterised in that** the longitudinal bias means is carried by said cover part and is associated with each element receiving space and arranged to be introduced into the associated element receiving space by securing the cover to the stack to abut a side face of a functional element therein distal from the element side face adjacent the element positioning member.

16. Assembly apparatus (850) as claimed in any one of claims 8 to 15 **characterised in that** the components (252ᵢ, 253ᵢ) of the stack are free to move longitudinally with respect to a stack end member (880) and the bias means is operable to force the components of the stack, including loaded functional elements, longitudinally with respect to said end member.

17. Assembly apparatus as claimed in any one of claims 8 to 16 **characterised in that** the location feature reception means (262¹ᵢ) defined at each element positioning member is dimensioned in said longitudinal direction to co-operate with location means (231¹ᵢ) of a said functional element, extending from the side face of said element, to effect separation between the side face of said element from the surface of the element positioning member.

18. Assembly apparatus as claimed in claim 9 or any claim dependent thereon **characterised in that** at least one element receiving space (255¹ᵢ) as defined by the stack and secured cover is arranged to provide an expansion inhibiting surface (255¹¹ᵢ) adjacent to the functional surface of a functional element positioned in the element receiving space, and, in operation, responsive to functional surface distorting forces exerted by tubular shaft expansion within the element to apply a distortion resisting force to said functional surface.

19. Assembly apparatus as claimed in any one of claims 8 to 18 **characterised by** apparatus datum means (261¹ᵢ) operable to define a positioning datum relative to which a rotation axis of a said shaft can be disposed and relative to which each said functional element (214) can be positioned by way of said element positioning members.

20. Assembly apparatus as claimed in claim 19 **characterised in that** the apparatus datum means comprises an element positioning member arranged to define by means of its location feature reception means (261¹ᵢ) a datum feature relative to a datum feature (214¹) defined by a said functional element.

## Patentansprüche

1. Verfahren zur Herstellung einer zusammengesetzten drehbaren Wellenanordnung (110) aus einer Vielzahl von funktionellen Elementen (111ᵢ, 114), die auf und durch eine gestreckte röhrenförmige Welle gesichert sind, wobei das Verfahren Definieren einer Vielzahl von funktionellen Elementen (111ᵢ), wobei jedes eine Wellenöffnung (121ᵢ), die sich zwischen einem Paar von beabstandeten Seitenflächen (122_{Ai}, 122_{Bi}) erstreckt, eine funktionelle Oberfläche (123ᵢ), die sich zwischen den Seitenflächen erstreckt und sie begrenzt, und wenigstens auf einer der Seitenflächen gebildete Positionierungsmittel aufweist, die sich davon erstrecken, Anordnen der Elemente in einer linearen Gruppierung, wobei sich die Wellenöffnungen in die gleiche Längsrichtung erstrecken, Festhalten der Elemente, in Bezug zueinander, gegenüber Drehung mittels der Positionierungsmittel über der Wellenöffnung, und wobei die röhrenförmige Welle sich durch die Wellenöffnungen erstreckt, Strecken der Welle, um die Elemente an der Welle zu sichern, **gekennzeichnet durch** einzelnes Festhalten der Elemente räumlich in alle Richtungen mittels Positionierungsmitteln (133, 233), die die Positionierungsmittel (130ᵢ, 230ᵢ), aber nicht die funktionelle Oberfläche einschließen, Definieren eines Durchlasses (135), der dimensionsgerecht kleiner als die einzelnen, sich in der Längsrichtung erstreckenden Wellenöffnungen ist, **durch** den geometrischen Ort der gemeinsamen Ausrichtung der festgehaltenen Wellenöffnungen der Elemente, Anordnen einer röhrenförmigen, sich **durch** die festgehaltenen Wellenöffnungen erstreckenden Welle (112), die einen Querschnitt aufweist, der nicht größer als der Durchlass ist, und wobei die Elemente in der räumlich festgehaltenen Beziehung gehalten werden, Strecken der röhrenförmige Welle, um jedes Element in Bezug zueinander zu sichern, umfasst.

2. Verfahren gemäß Anspruch 1, welches Definieren einer Baugruppe (250) mit beabstandeten Elementaufnahmeräumen (255ᵢ), wobei jeder eine Begrenzung aufweist, die durch ein Element-Positionierungsglied gebildet wird, Definieren von zu den Positionierungsmitteln (230ᵢ) der Elementseitenflächen komplementären Positionierungsaufnahmemitteln (261ᵢ) an einer Oberfläche jedes Positionierungsglieds umfasst, und welches **gekennzeichnet ist durch** Definieren von Positionierungsmitteln, die von der Begrenzung der funktionellen Oberflächen und der Wellenöffnung getrennt sind, Definieren von zwei beabstandeten Positionierungspunkten (231ᵢ, 232ᵢ).

3. Verfahren gemäß Anspruch 2, welches Definieren eines Wellenmontierbezugspunkts (15, 114¹) relativ zu einer gewünschten Drehachse (113) der zusammengesetzten Wellenanordnung, Anordnen der Positionierungsmittel jeder Elementseitenfläche in Bezug auf die funktionelle Oberfläche des Elements und Anordnen der Positionierungsaufnahmemittel jedes zugeordneten Positionierungsglieds in Bezug auf den Wellenmontierbezugspunkt umfasst.

4. Verfahren gemäß Anspruch 3, **gekennzeichnet durch** Definieren des Wellenmontierbezugspunkts als Arbeitsfläche (114¹) von wenigstens einem funktionellen Element.

5. Verfahren gemäß irgendeinem der Ansprüche 2 bis 4, **dadurch gekennzeichnet, dass** Ineinandergreifen und Trennen der Positionierungsmittel und Positionierungsaufnahmemittel in eine Längsrichtung entlang der Achse der Wellenöffnungen und Ausrichten jedes Elements axial zu seinem zugeordnetem Positionierungsglied bewirkt wird.

6. Verfahren gemäß irgendeinem der Ansprüche 2 bis 5, **gekennzeichnet durch** Definieren der Positionierungsmittel und der Positionierungsaufnahmemittel, so dass, wenn das funktionelle Element räumlich in Bezug auf das Positionierungsglied positioniert ist, **dadurch** die Seitenfläche des Elements von der Oberfläche des Positionierungsglieds beabstandet sind.

7. Verfahren gemäß irgendeinem der Ansprüche 1 bis 6, **gekennzeichnet durch** Umschließen von wenigstens einem Teil der Arbeitsfläche von wenigstens einem festgehaltenen Element mit einer Ausdehnungs-hemmenden Oberfläche (255¹ᵢ, 255¹¹ᵢ), die vor und während des Streckens der röhrenförmigen Welle angeordnet ist, um keine festhaltende Kraft auf die Arbeitfläche, außer als Antwort auf Verziehen der Arbeitsfläche **durch** die ausdehnende röhrenförmige Welle, auszuüben.

8. Vorrichtung (250, 350, 350¹, 450, 550, 650, 750, 850) zur Herstellung einer zusammengesetzten Wellenanordnung aus funktionellen Elementen (211ᵢ, 214), die entlang einer gestreckten röhrenförmigen Welle beabstandet sind und daran gesichert sind, um das Verfahren gemäß irgendeinem der vorhergehenden Ansprüche durchzuführen, welche einen sich längs erstreckenden Satz (251) von Körpern, die abwechselnde Elementaufnahmeräume (255ᵢ) und Element-Positionierungsglieder (252ᵢ) definieren, wobei jedes Element-Positionierungsglied eine Wellenentnahmeaussparung (256ᵢ) aufweist, die sich längs dadurch und transversal zu dem Rand (257ᵢ) des Glieds erstreckt und bei dessen transversalen Fläche (252_{Ai}) einem Elementaufnahmeraum gegenüberliegt, Positionierungsaufnahmemittel (262ᵢ) umfasst, die sich von der transversalen Fläche erstrecken, die geformt und positioniert sind, um mit komplementären Positionierungsmitteln (231ᵢ) zu kooperieren, die an einer Seitenfläche des funktionellen Elements gebildet sind, und welche **gekennzeichnet ist durch** Positionierungsmittel (233), die betriebsfähig sind, um jedes funktionelle Element, das in einem Aufnahmeraum angeordnet ist, einzeln in Bezug auf ein benachbartes Positionierungsglied mittels Ineinandergreifen zwischen den Positionierungsmitteln und den Positionierungsaufnahmemitteln zu lokalisieren und es räumlich in Bezug auf die Positionierungsglieder festzuhalten, wobei die Elementwellenöffnung mit der Wellenaufnahmeaussparung des Positionierungsglieds ausgerichtet ist, während die röhrenförmige Welle verformbar gestreckt ist, um die räumlich festgehaltenen Elemente permanent daran zu sichern.

9. Baugruppe gemäß Anspruch 8, **gekennzeichnet durch** ein Abdeckteil (260), das angeordnet ist, um sich längsseitig entlang des Satzes zu erstrecken und in Bezug dazu in einer transversalen Richtung abnehmbar gesichert zu sein.

10. Baugruppe (350) gemäß Anspruch 9, **dadurch gekennzeichnet, dass** wenigstens irgendeines der Element-Positionierungsglieder längs in einer Trennebene zweigeteilt ist, die die gewünschte Drehachse einer Anordnung enthält, die durch die Vorrichtung in Haupt- und komplementäre Teile (352, 352¹ᵢ) zusammengesetzt ist und die komplementäre Teile durch eine Abdeckung (360) getragen werden, so dass, wenn das Abdeckteil in Bezug auf den Satz (351) gesichert ist, die Haupt- und komplementären Teile der Element-Positionierungsglieder in Rand zu Rand-Beziehung nebeneinander gestellt sind, wobei die Wellenentnahmeaussparung (356ᵢ, 356¹ᵢ) jedes Gliedteils an den nebeneinanderstehenden Rändern endet.

11. Baugruppe gemäß irgendeinem der Ansprüche 8 bis 10, **dadurch gekennzeichnet, dass** das Positionierungsaufnahmemittel (261) an der transversalen Oberfläche von wenigstens einem Element-Positionierungsglied als wenigstens eine Aussparung (262ᵢ, 263ᵢ) definiert ist, die sich parallel zu der Wellenentnahmeaussparung zu einem Rand des Glieds erstreckt.

12. Baugruppe (350¹) gemäß Anspruch 9, **dadurch gekennzeichnet, dass** wenigstens irgendeines der Element-Positionierungsglieder von dem Satz transversal zu der Längsrichtung trennbar ist und durch das Abdeckteil getragen wird.

13. Baugruppe gemäß irgendeinem der Ansprüche 8 bis 12, **dadurch gekennzeichnet, dass** die Positionierungsmittel Längsausrichtungsmittel (270; 271) einschließen, die längs-wirkende elastische Mittel (270ᵢ, 271ᵢ) umfassen, die betriebsfähig sind, um die Positionierungsmittel eines in dem Aufnahmeraum empfangenen funktionellen Elements longitudinal in Kooperation mit dem Positionierungsaufnahmemittel eines Element-Positionierungsglieds zu zwingen.

14. Baugruppe gemäß irgendeinem der Ansprüche 8 bis 13, **dadurch gekennzeichnet, dass** das Positionierungsmittel Längsausrichtungsmittel (272ᵢ) einschließt, die Verkeilungsmittel (272ᵢ) umfassen, die mit einer Oberfläche des Satzes kooperierfähig sind, die betriebsfähig ist, um die Positionierungsmittel des in den Aufnahmeraum empfangenen funktionellen Elements longitudinal in Kooperation mit dem Positionierungsaufnahmemittel eines Element-Positionierungsglieds zu zwingen.

15. Baugruppe gemäß Anspruch 13 oder 14, **dadurch gekennzeichnet, dass** das Längsausrichtungsmittel durch das Abdeckteil getragen wird und zu jedem Elementaufnahmeraum zugeordnet ist und angeordnet ist, um in dem zugeordneten Elementaufnahmeraum durch Sichern der Abdeckung an dem Satz eingeführt zu werden, um eine Seitenfläche eines funktionellen Elements darin distal von der Elementseitenfläche benachbart zu dem Element-Positionierungsglied angrenzen zu lassen.

16. Baugruppe (850) gemäß irgendeinem der Ansprüche 8 bis 15, **dadurch gekennzeichnet, dass** die Komponenten (252ᵢ, 253ᵢ) des Satzes frei sind, sich längs in Bezug auf ein Satzendglied (880) zu bewegen und das Ausrichtungsmittel betriebsfähig ist, um die Komponenten des Satzes, einschließlich belasteter funktioneller Elemente, longitudinal in Bezug auf das Endglied zu zwingen.

17. Baugruppe gemäß irgendeinem der Ansprüche 8 bis 16, **dadurch gekennzeichnet, dass** das Positionierungsaufnahmemittel (262¹ᵢ), das an jedem Element-Positionierungsglied definiert ist, in der Längsrichtung dimensioniert ist, um mit Positionierungsmittel (231¹ᵢ) eines funktionellen Elements zu kooperieren, das sich von der Seitenfläche des Elements erstreckt, um eine Trennung zwischen der Seitenfläche des Elements von der Oberfläche des Element-Positionierungsglieds zu bewirken.

18. Baugruppe gemäß Anspruch 9, oder irgendeinem, davon abhängigen Anspruch, **dadurch gekennzeichnet, dass** wenigstens ein Elementaufnahmeraum (255¹ᵢ), der durch den Satz und die gesicherte Abdeckung definiert ist, angeordnet ist, um eine Ausdehnungs-hemmende Oberfläche (255¹¹ᵢ) benachbart zu der funktionellen Oberfläche eines funktionellen Elements bereitzustellen, das in dem Elementaufnahmeraum positioniert ist, und bei Betrieb, auf funktionelle Oberfläche-verziehende Kräfte anspricht, die durch das Strecken der röhrenförmigen Welle in dem Element ausgeübt werden, um eine Verzieh-resistente Kraft auf die funktionelle Oberfläche anzuwenden.

19. Baugruppe gemäß irgendeinem der Ansprüche 8 bis 18, **gekennzeichnet durch** ein Vorrichtungsbezugspunktmittel (261¹ᵢ), das betriebsfähig ist, um einen Positionierungsbezugspunkt zu definieren, relativ zu dem eine Drehachse der Welle angeordnet sein kann und relativ zu dem jedes funktionelle Element (214) mittels der Element-Positionierungsglieder positioniert sein kann.

20. Baugruppe gemäß Anspruch 19, **dadurch gekennzeichnet, dass** das Vorrichtungsbezugspunktmittel ein Element-Positionierungsglied umfasst, das angeordnet ist, um mittels seiner Positionierungsaufnahmemittel (261¹ᵢ) eine Bezugspunktsposition relativ zu einer Bezugspunktposition (214¹) zu definieren, die durch das funktionelle Element definiert ist.

## Revendications

1. Procédé de fabrication d'une structure montée sur un arbre tournant (110) d'une pluralité d'éléments fonctionnels (111ⱼ, 114) fixés sur, et par, un arbre tubulaire dilaté, le procédé comprenant les étapes consistant à : définir une pluralité d'éléments fonctionnels (111ⱼ) ayant chacun une ouverture d'arbre (121ⱼ) s'étendant entre deux faces latérales espacées (122_{Aj}, 122_{Bj}), une surface fonctionnelle (123ⱼ) s'étendant entre les faces latérales et les liant, et, sur au moins une des faces latérales, un moyen de motif de localisation s'étendant à partir de celle-ci ; disposer les éléments en un réseau linéaire, les ouvertures des arbres s'étendant dans la même direction longitudinale ; restreindre les éléments les uns par rapport aux autres par le moyen de motif de localisation à l'encontre d'une rotation autour des ouvertures d'arbre ; et, l'arbre tubulaire s'étendant au travers des ouvertures d'arbre, dilater l'arbre pour fixer les éléments à l'arbre ; **caractérisé par** les étapes suivantes : restreindre les éléments individuellement et spatialement dans toutes les directions par un moyen de positionnement (133 ; 233) comprenant le moyen de motif de localisation (130ⱼ, 230ⱼ) mais pas la surface fonctionnelle ; définir par le lieu géométrique de l'alignement commun des ouvertures d'arbre restreintes des éléments un passage traversant (135) dimensionnellement plus petit que les ouvertures d'arbre individuelles, s'étendant dans la direction longitudinale ; disposer un arbre tubulaire (112), s'étendant à travers les ouvertures d'arbre restreintes, ayant une section non supérieure au passage traversant; et, les éléments étant maintenus dans la relation restreinte spatialement, dilater l'arbre tubulaire pour fixer chaque élément par rapport aux autres.

2. Procédé selon la revendication 1, comprenant les étapes consistant à définir un dispositif de montage (250) comportant des espaces de réception d'éléments espacés (255ⱼ) ayant chacun une limite formée par une pièce de positionnement d'élément ; définir au niveau d'une surface de chaque pièce de positionnement un moyen de réception de motif de localisation (261ⱼ) complémentaire du moyen de motif de localisation de face latérale d'élément (230ⱼ), et **caractérisé par** l'étape consistant à définir le moyen de motif de localisation séparé de la limite de la surface fonctionnelle, l'ouverture de l'arbre définissant au moins deux points de localisation espacés (231ⱼ, 232ⱼ).

3. Procédé selon la revendication 2, comprenant les étapes consistant à définir un repère de montage d'arbre (15, 114¹) par rapport à un axe désiré (113) de rotation de la structure d'arbre assemblée ; disposer le moyen de motif de localisation de chaque face latérale d'élément par rapport à la surface fonctionnelle de l'élément ; et disposer le moyen de réception de motif de localisation de chaque pièce de positionnement associée par rapport au repère de montage d'arbre.

4. Procédé selon la revendication 3, **caractérisé par** l'étape consistant à définir le repère de montage d'arbre en tant que surface de travail (114¹) d'au moins un élément fonctionnel.

5. Procédé selon l'une quelconque des revendications 2 à 4, **caractérisé par** les étapes consistant à effectuer un engagement et un désengagement du moyen de motif de localisation et du moyen de réception de motif dans la direction longitudinale le long de l'axe des ouvertures d'arbre, et à solliciter chaque élément axialement vers sa pièce de positionnement associée.

6. Procédé selon l'une quelconque des revendications 2 à 5, **caractérisé par** l'étape consistant à définir le moyen de motif de localisation et le moyen de réception de motif de sorte que, l'élément fonctionnel étant spatialement positionné par rapport à la pièce de positionnement, la face latérale de l'élément est espacée de la surface de la pièce de positionnement.

7. Procédé selon l'une quelconque des revendications 1 à 6, **caractérisé par** l'étape consistant à entourer au moins une partie de la surface de travail d'au moins un élément restreint par une surface d'inhibition de dilatation (255¹ⱼ, 255¹¹ⱼ) disposée avant et pendant la dilatation de l'arbre tubulaire pour n'exercer aucune force de restriction sur la surface de travail sauf en réponse à une distorsion de la surface de travail par l'arbre tubulaire de dilatation.

8. Appareil (250, 350, 350¹, 450, 550, 650, 750, 850) pour fabriquer une structure d'arbre assemblée d'éléments fonctionnels (211ⱼ, 214) espacés le long d'un arbre tubulaire dilaté et fixé à celui-ci pour mettre en oeuvre le procédé selon l'une quelconque des revendications précédentes, comprenant un empilement s'étendant longitudinalement (251) de corps définissant des espaces de réception d'éléments (255ⱼ) et de pièces de positionnement d'éléments (252ⱼ) alternés, les pièces de positionnement d'éléments ayant chacune un évidement d'enlèvement d'arbre (256ⱼ) s'étendant au travers longitudinalement et transversalement vers le bord (257ⱼ) de la pièce et, au niveau d'une surface transverse (252_{Aj}) de celle-ci, faisant face à un espace de réception d'élément, un moyen de réception de motif de localisation (262ⱼ) s'étendant à partir de la face transverse, qui a une forme et une position propres à coopérer avec un moyen de motif de localisation complémentaire (231ⱼ) formé sur une face latérale dudit élément fonctionnel, et **caractérisé par** un moyen de positionnement (233) actionnable pour localiser chaque élément fonctionnel, placé dans un espace de réception, individuellement par rapport à une pièce de positionnement adjacente par engagement entre le moyen de motif de localisation et le moyen de réception de motif de localisation, et pour le restreindre spatialement par rapport à la pièce de positionnement, l'ouverture d'arbre d'élément étant alignée avec l'évidement de réception d'arbre de la pièce de positionnement tandis que l'arbre tubulaire est dilaté de façon déformable pour fixer à celui-ci de façon permanente l'élément restreint spatialement.

9. Appareil d'assemblage selon la revendication 8, **caractérisé par** une partie de couvercle (260) disposée pour s'étendre longitudinalement le long de l'empilement et pour être fixée de façon amovible par rapport à celui-ci dans une direction transverse.

10. Appareil d'assemblage (350) selon la revendication 9, **caractérisé en ce qu'**au moins certaines des pièces de positionnement d'éléments sont fendues longitudinalement dans un plan de séparation qui contient l'axe de rotation désiré d'une structure assemblée par l'appareil en des parties principales et complémentaires (352, 352¹ⱼ), et les parties complémentaires sont portées par la partie de couvercle (360), de sorte que, la partie de couvercle étant fixée par rapport à l'empilement (351), les parties principales et complémentaires des pièces de positionnement d'éléments sont juxtaposées bord à bord, l'évidement d'enlèvement d'arbre (356ⱼ, 356¹ⱼ) de chaque partie de pièce se terminant au niveau des bords juxtaposés.

11. Appareil d'assemblage selon l'une quelconque des revendications 8 à 10, **caractérisé en ce que** le moyen de réception de motif de localisation (261) est défini au niveau de la surface transverse d'au moins une pièce de positionnement d'élément en tant qu'au moins un évidement (262ⱼ, 263ⱼ) s'étendant parallèlement à l'évidement d'enlèvement d'arbre vers un bord de la pièce.

12. Appareil d'assemblage (350¹) selon la revendication 9, **caractérisé en ce que** au moins certaines des pièces de positionnement d'éléments sont séparables de l'empilement transversalement à la direction longitudinale et sont portées par la partie de couvercle.

13. Appareil d'assemblage selon l'une quelconque des revendications 8 à 12, **caractérisé en ce que** le moyen de positionnement comprend un moyen de sollicitation longitudinale (270, 271) comprenant un moyen élastique agissant longitudinalement (270ⱼ, 271ⱼ) actionnable pour forcer le moyen de motif de localisation d'un élément fonctionnel reçu dans l'espace de réception longitudinalement en coopération avec le moyen de réception de motif de localisation d'une pièce de positionnement d'élément.

14. Appareil d'assemblage selon l'une quelconque des revendications 8 à 13, **caractérisé en ce que** le moyen de positionnement comprend un moyen de sollicitation longitudinale (272ⱼ) comprenant un moyen de coin (272ⱼ) pouvant coopérer avec une surface de l'empilement, actionnable pour forcer le moyen de motif de localisation d'un élément fonctionnel reçu dans l'espace de réception longitudinalement en coopération avec le moyen de réception d'une pièce de positionnement d'élément.

15. Appareil d'assemblage selon la revendication 13 ou 14, **caractérisé en ce que** le moyen de sollicitation longitudinale est porté par la partie de couvercle et est associé à chaque espace de réception d'élément et est disposé pour être introduit dans l'espace de réception d'élément associé en fixant le couvercle à l'empilement pour buter contre une face latérale d'un élément fonctionnel dans celui-ci distale par rapport à la face latérale de l'élément adjacente à la pièce de positionnement d'élément.

16. Appareil d'assemblage (850) selon l'une quelconque des revendications 8 à 15, **caractérisé en ce que** les composants (252ⱼ, 253ⱼ) sont libres de se déplacer longitudinalement par rapport à une pièce d'extrémité d'empilement (880) et le moyen de sollicitation est actionnable pour forcer les composants de l'empilement, comprenant des éléments fonctionnels chargés, longitudinalement par rapport à la pièce d'extrémité.

17. Appareil d'assemblage selon l'une quelconque des revendications 8 à 16, **caractérisé en ce que** le moyen de réception de motif de localisation (262¹ⱼ) défini au niveau de chaque pièce de positionnement d'élément est dimensionné dans la direction longitudinale de façon à coopérer avec le moyen de positionnement (231¹ⱼ) dudit élément fonctionnel, s'étendant à partir de la face latérale de l'élément, pour effectuer une séparation entre la face latérale de l'élément et la surface de la pièce de positionnement d'élément.

18. Appareil d'assemblage selon la revendication 9 ou l'une quelconque des revendications qui en dépend, **caractérisé en ce qu'**au moins un espace de réception d'élément (255¹ⱼ), tel que défini par l'empilement et le couvercle, est agencé pour fournir une surface d'inhibition de dilatation (255¹¹ⱼ) adjacente à la surface fonctionnelle d'un élément fonctionnel positionné dans l'espace de réception d'élément et, en fonctionnement, en réponse à des forces de distorsion de surface fonctionnelle exercées par la dilatation de l'arbre tubulaire dans l'élément, pour appliquer une force résistant à la distorsion vers la surface fonctionnelle.

19. Appareil d'assemblage selon l'une quelconque des revendications 8 à 18, **caractérisé par** un moyen de repère d'appareil (261¹j) actionnable pour définir un repère de positionnement par rapport auquel un axe de rotation dudit arbre peut être disposé et par rapport auquel chaque élément fonctionnel (214) peut être positionné par les pièces de positionnement d'éléments.

20. Appareil d'assemblage selon la revendication 19, **caractérisé en ce que** le moyen de repère d'appareil comprend une pièce de positionnement d'élément disposé pour définir par son moyen de réception de motif de localisation (261¹ⱼ) un motif de repère par rapport à un motif de repère (214¹) défini par un élément fonctionnel.
